# EUROPEAN PATENT APPLICATION

(11) **EP 1 056 001 A2**
(43) Date of publication of application: **29.11.2000**
(21) Application number: 00111179.8
(22) Date of filing: 24.05.2000
(51) Int. Cl.: G06F 9/445

(54) **System and method for dynamically loading platform independent drivers**

(30) Priority: 26.05.1999 US 320050
(71) Applicant: Xerox Corporation, Rochester, New York 14644 (US)
(72) Inventor: Jacobi, Christian P., Palo Alto, CA 94303 (US); Thornton, James D., Redwood City, CA 94063 (US); Austin, Paul R., Webster, NY 14580 (US); Kaminsky, Alan R., Rochester, NY 14618 (US); Hurley, Shawn O., Rochester, NY 14607 (US)
(74) Representative: Grünecker, Kinkeldey, Stockmair & Schwanhäusser Anwaltssozietät

(57) **Abstract**

A system and method is disclosed for dynamically loading platform independent drivers. The invention encompasses a "Printlet" and a "Printlet Dock Print Driver." collectively referred to as the Printlet System. A Printlet is that portion of the present invention comprising platform-independent software technology (such as Java) and, generally, is software which enables a computer system or a network of electronically connected computers to communicate with a specific device (in the same manner as a device driver). The Printlet is dynamically loaded from the connected device by the operating system of a computer upon invocation by the user, or a client application,; or on demand. The platform independent Printlet interfaces with a Printlet Dock Device Driver. A Printlet Dock Print Driver (PDPD) is built into, or installed upon, the OS; is computer system platform and device independent and implements, or otherwise activates, a defined PrintletManager's API and it preferably provides a graphical user interface (GUI) to enable the user to select a Printlet-Enabled device. The PDPD loads the Printlet from the Printlet Enabled device and, subsequently, activates the Printlet software to thereafter place the computer system in communication with that device. Various embodiments include, but are not limited to the addition of: a Download Manager which implements various download protocols and manages a local cached; a multiplicity of GUI's to provide the user with the capability to manage a plurality of devices, job ticket controls, display device status, and administrative support; ability to detect Printlet-Enabled devices and add them to a device list; and the ability to add device specific rendering and PDL generation, if desired.

## Description

### FIELD OF THE INVENTION

The present invention relates to the field of operating systems and device driver technology and architectures and, more particularly, to systems and methods for loading device drivers into a computer system or network.

### BACKGROUND OF THE INVENTION

In the arts, when an operating system (OS) boots up it is typical for the OS to seek out and load into memory all the device driven which it needs to activate various process devices attached to the computer system, such as, printer drivers. With respect to printing devices, when the computer operator wishes to send a page to the printer for processing the operating system invokes the specific driver for that printing device to process the page. If' there is a printing device connected to the computer system for which the operating system does not have the driver already loaded, then the operator will get an error message sent back from the operating system indicating that the device driver does not exist.

On every client platform (computer), one or more print drivers are pre-installed in the platform operating system. Each print driver is designed to interface with a particular kind of printer using that printer's external interface. Furthermore, the print driver is targeted to the specific operating system; it uses that operating system's standard print driver application programming interface (API) to communicate with the operating system. The operating system often provides a common print user interface (UI), typically invoked by an application's "Print" and "Page Setup" commands. On many OS's the print driver can also supply a custom print UI for its associated printer that allows the user to control printer features beyond those provided in common print UI.

When a client application wants to do a print job, the client application uses the operating system's standard client print API to choose one of the installed printers and generate the printout. The operating system in turn communicates with the chosen print driver, translating the standard client print API calls into standard print driver API calls. The print driver in turn communicates with its associated printer to accomplish the printout. Note that all the software in this scenario is statically loaded, that is, installed in the operating system before any printing takes place.

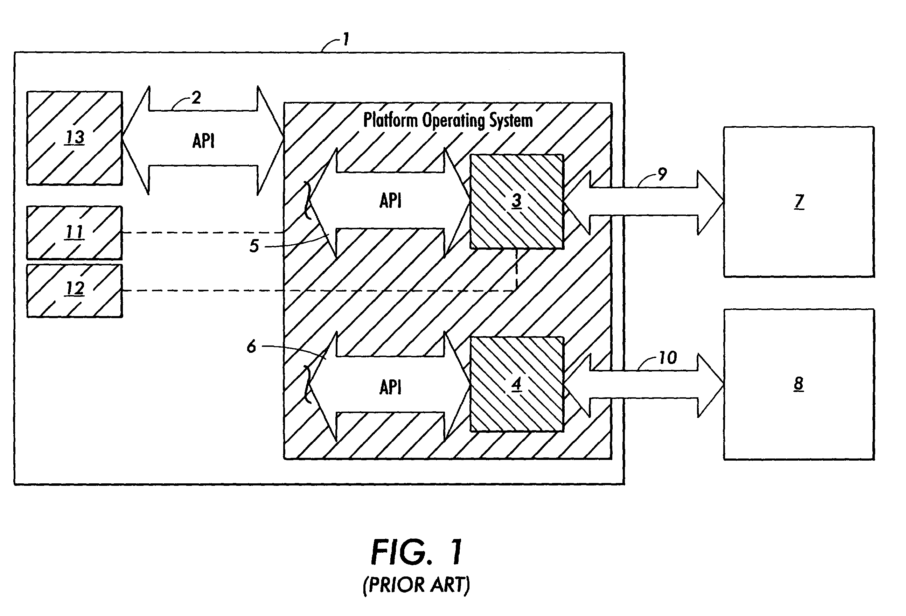

With respect to prior art Figure 1 illustrating convention print client software architecture, the client platform 1 is the configuration of the specific computer being operated by the user, the OS is loaded onto the platform and performs major operations for the computer system. The standard print driver application program interface (API) 2 is a part of the OS and interfaces with the standard print drivers 3 and 4 which, in turn, are in communication with the printers through their individual printer interfaces 9 and 10. The standard client print API interfaces 5 and 6 with the client's application software program 13. The client's application program can be a word processing program which invokes this interface 11 and 12 when the user hits the print button. Direct interaction with a common print user interface which can be spawned by either the operating system or one of the standard printer drivers is often required. Through this interface, the printer's specific configuration, i.e., page size, fonts, etc, are entered by the user along with any other printer specific instructions either mandated or optionally required.

Although there are several advantages with the above described architecture because the operating system merely provides the infrastructure for installing and invoking print driver modules and interfacing with the client's application, the printer interface drivers are not built into the operating system and have to be pre-loaded prior to accessing (or sending jobs to) the device. This requires specific knowledge about the connected printing device, which may not always be the case, and the availability of the driver interface programs. In order for the client's application to be able to make use of a particular printing device, the client must first pre-install that particular printer's print driver. This consumes client resources and, quite often, the printer's drivers are either difficult to find or are out of date. In this respect, the user cannot readily use arbitrarily connected printing devices on-the-fly without some pre-existing knowledge of the priming device and without the driver already having been loaded by the OS.

Currently, print drivers need to be targeted to a specific OS. Since a print driver is targeted to a specific OS, the same printer needs different print drivers designed and coded for differing operating systems. In other words, a printer vendor must spend considerable resources in the design and development of separate print drivers for each combination of a printer and an OS. If the vendor sells M printers and supports N operating systems, the vendor must develop M*N print drivers which increases product development expense and the cost of the end product increases as well.

The print driver's custom print user-interface (UI) typically employs the target operating system's UI look and feel conventions which may vary widely across a plurality of computer platforms. As a result, the same printer typically has to have multiple custom print UIs designed and coded for a plurality of different operating systems. Thus, to use the same printer from different client platforms, the user must not only have the correct driver to install, but must also learn to use multiple custom print UIs.

Software administration of a plurality of drivers over a network can be cumbersome. If a printer's embedded software needs to change in order to fix defects or add new capabilities then the corresponding print driver software may also change. This has the drawback of having to distribute to all current users the new print drivers and having the end-users install the new print driver on potentially a large number of client workstations.

### SUMMARY OF THE INVENTION

A system and method providing for dynamically loading platform independent drivers encompassing a "Printlet" and a "Printlet Dock Print Driver." collectively referred to as the Printlet System. A Printlet is that portion of the present invention comprising platform-independent software technology (such as Java) and, generally, is software which enables a computer system or a network of electronically connected computers to communicate with a specific device (in the same manner as a device driver). The Printlet is dynamically loaded from the connected device by the operating system of a computer upon invocation by the user, or a client application,; or on demand. The platform independent Printlet interfaces with a Printlet Dock Device Driver. A Printlet Dock Print Driver (PDPD) is built into, or installed upon, the OS; is computer system platform and device independent and implements, or otherwise activates, a defined PrintletManager's API and it preferably provides a graphical user interface (GUI) to enable the user to select a Printlet-Enabled device. The PDPD loads the Printlet from the Printlet Enabled device and, subsequently, activates the Printlet software to thereafter place the computer system in communication with that device. Various embodiments include, but are not limited to the addition of: a Download Manager which implements various download protocols and manages a local cached; a multiplicity of GUI's to provide the user with the capability to manage a plurality of devices, job ticket controls, display device status, and administrative support; ability to detect Printlet-Enabled devices and add them to a device list; and the ability to add device specific rendering and PDL generation, if desired.

Additional benefits and advantages of the present invention will be set forth in the description which follows, and in part will be obvious from the description, or may be learned by the practice of this invention. The advantages of this invention, as described herein, may be realized and obtained by means particularly pointed out and distinctly claimed in the appended claims, taken in conjunction with the accompanying drawings and detailed specification.

### BRIEF DESCRIPTION OF THE DRAWINGS:

In order that the manner in which the above-recited and other advantages and objects of the present invention are obtained, a more particular description of this invention, briefly described above, will be rendered by reference to a specific embodiment thereof which is illustrated in the appended drawings. Understanding that these drawings depict only a typical embodiment of the present invention and are not therefore to be considered in any way limiting of its scope, this invention will be described and explained with additional specificity and detail through the use of the accompanying drawings, in which:
Figure 1 is a prior art illustration of conventional print client software architecture;
Figure 2 illustrates the relationship between the Platform Dependent Printlet Dock Print Driver and the Platform Independent Printlet System;
Figure 3 illustrates the three layers into which the Printlet System of Figure 2A can be divided;
Figure 4 shows how the Printlet System's architectural layers are implemented in the Windows-type environment;
Figure 5 shows the Printlet System of the present invention configured with the initial capabilities;

### DETAILED DESCRIPTION OF THE SPECIFICATION

What is presented is a novel system and method for a print client software architecture which, in the preferred embodiment, consists of two parts, a "Printlet" and a "Printlet Dock Print Driver." The system and method of the present invention for dynamically loading platform independent drivers encompassing the above two part is collectively referred to herein as the Printlet System.

A Printlet, as used herein, refers to that portion of the software architecture of the present invention that enables a computer system or a network of electronically connected computers to communicate with the device. For example, a printer connected to a computer system or network would require a printer driver in order for the computer system to send print jobs to the printer, as more fully describe below. Preferably, the Printlet comprises platform-independent software technology (such as Java). The Printlet is dynamically loaded from the connected device by the operating system of a computer upon invocation by the user, or a client application,; or on demand. The platform independent Printlet interfaces with the Printlet Dock Device Driver, described herein.

A Printlet Dock Print Driver (PDPD), as used herein, refers to the portion of the software architecture of the present invention resides with the computer system and interfaces with the particular operating system (OS) of the computer. It should be understood that although the preferred embodiment refers to a Printlet Dock Printer Driver (for communicating with printing devices), it is intended to also refer, generically, to a Printlet Dock Device Driver (PDDD) as well (for communicating with any Printlet-Enabled device). Preferably, the PDPD is built into, or installed upon, the OS; is computer system platform and device independent and implements, or otherwise activates, a defined PrintletManager's API. It may use a lookup service to find available Printlet-Enabled printers connected to the computer system and it preferably provides a graphical user interface (GUI) to enable the user to select an available Printlet-Enabled device on the computer system. The PDPD or PDDD loads the Printlet from the Printlet Enabled device and, subsequently, activates the Printlet software to thereafter place the computer system in communication with that device.

An object, as used herein, refers to a software or hardware implementation of the designated component. For an example, a CustomPrintUI object would refer to a software implementation of a customized user interface which would allow the user to manipulate various device settings. In a Windows environment, one skilled in the art would be able to generate such an object, configure it, and implement it with their specific architecture and/or operating system.

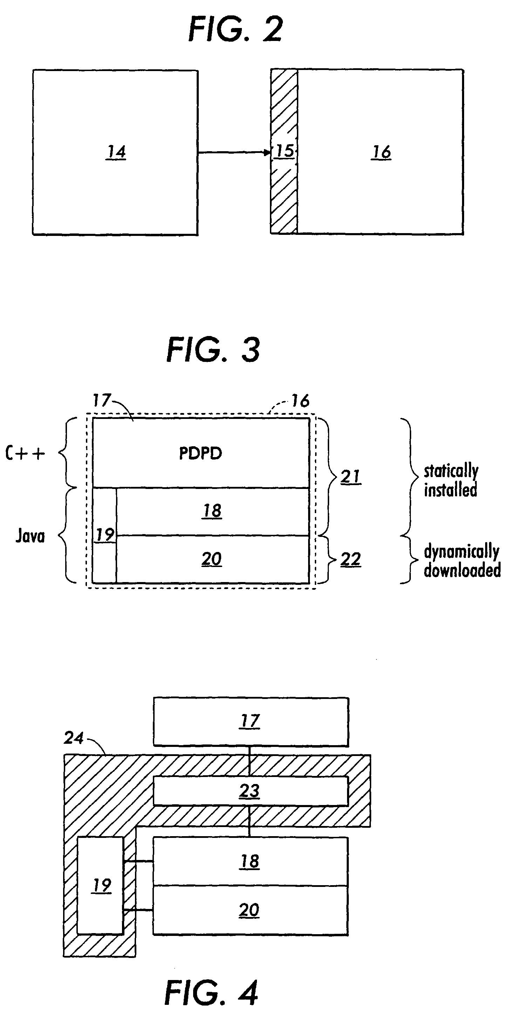

Attention is now directed to the embodiment of Figure 2, which illustrates the relationship between a Platform Dependent Printlet Dock Print Driver 14 and a Platform Independent Printlet 15 in the Printlet System 16 of the present invention

With reference to Figure 3, the Printlet System 16 of the present invention preferably comprises three layers. The Printlet Dock Print Driver Layer 17 implements the platform operating system's PrintDriver interface by making use of the objects in the subsequent layers below thereby providing an entry point into the Printlet System from the OS. The PDPD layer 17 allows a client's application, in one embodiment, to print on Printlet-Enabled printers transparently. The PDPD layer 17 is preferably written in a platform specific language (such as C++) and thereafter installed on the designated platform. The Printlet Management Layer 18 allows the PDPD Layer 17 to manage and gain access to individual devices' capabilities. The Printlet Management Layer is also preferably written in Java-(a platform independent language) and then installed on the platform. In this instance, the Printlet Management Layer's Java code would run on a Java Virtual Machine (VM) 19 environment enabled by the operating system. By accessing the Printlets loadable objects from the Printlet-Enabled device, the Printlet Layer 20 provides access to individual devices' capabilities. Each Printlet-Enabled device's capabilities may be divided among several Printlet objects 22. The Printlet objects' Java code would then run in the same Java VM environment as does the Printlet Management Layer. The combination of the top two layers 17 and 18 is referred to as the Printlet Dock Driver 21. Unlike the dynamically loaded Printlet Layer 20, the PDPD Layer 17 is installed in the OS like any other driver interfacing software, and the Printlet Management Layer 18 is installed in whatever platform specific manner is needed for the PDPD Layer to access the Printlet Management Layer.

Figure 4 illustrates how the present invention's architectural layers are implemented in a Windows-type environment. In this implementation, a Printlet System Interface 23 class is written as a JavaBean and is packaged in a Java archive (JAR) file. When activated, the PDPD Layer first creates a COM object instance. The COM object is an instance of the ActiveX-JavaBean bridge 24 (such as beans.ocx), which contains the Java VM 19. The COM object could be run either in-process, i.e., in the PDPD's address space, or out-of-process, i.e., in its own separate space. In the latter case, there would have to be a server application (an executable) for beans.ocx to run in. The ActiveX-JavaBean bridge 24 is given the JAR file and is subsequently instructed to create an instance of the Printlet Interface class. The bridge creates that object and returns an IDispatch interface to it. The PDPD Layer 17 then uses the IDispatch interface to invoke on or more methods in the Printlet System Interface object to gain access to the Java objects in the other layers. These objects are returned as IDispatch interface instances.

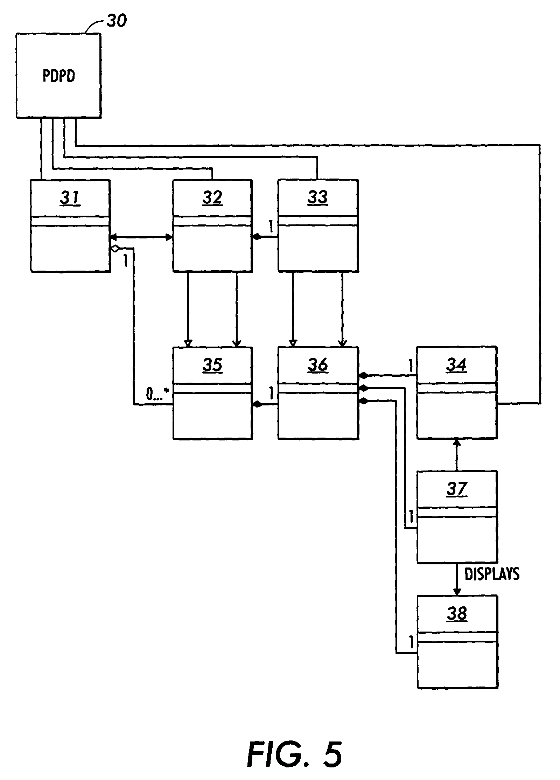

Figure 5 illustrates the individual objects of the Printlet's architecture of Figs. 2 and 3 and how these objects interrelate. In the preferred embodiment, the objects of the Printlet of the present invention are also implemented as Java objects. Some pieces (or objects) are downloadable and their implementations differ from device to device (printer to printer). Although the Printlet System of the present invention is primarily described herein in terms of enabling priming capabilities, the concepts disclosed herein and architecture thereof are equally applicable to other kinds of networked devices such as digital copiers, scanners, fax machines, and even multifunction devices. Therefore, in the preferred embodiment certain objects generically refer to devices rather than "printers" as does the alternative embodiment. Such objects are intended herein to be extendable so as to encompass a plurality of other kinds of devices.

The following description is put forth incrementally, not only to show step-wise how the preferred embodiment (and the alternative embodiment) are implemented herein, but also, to illustrate that the present invention finds its implementations with a variety of readily extendable capabilities as illustrated and described.

Attention is now directed to Figure 5, which shows the Printlet System of the present invention implemented. In this specific configuration, the PDPD 30 interfaces directly to a plurality of objects, the DeviceList 31, SelectedDevice 32, SelectedPrinter 33, and the JobTicket object 34. The DeviceList 31 object is a list of Printlet-Enabled devices available to or otherwise selectable by a user which preferably enables the following capabilities: (a) gets a default device, if one has not been selected, and returns a SelectedDevice object; (b) displays a user interface (UI) allowing the user to pick a device; and returns a SelectedDevice object set to the device the user chose; (c) serializes device information 35 (in a table or list format) and stores the present list's state in persistent storage (such as a file); and (d) restores the present list's state from persistent storage (de-serializing or reformatting the data if needed). For example, a standalone printer's would be represented as a device with just a printer object. A standalone scanner would be represented as a device with just a scanner object. A multifunction device would be represented collectively as a device with a printer object, a scanner object, and a fax object; and so on. In turn, the SelectedDevice object pulls a device from the DeviceList object and then delegates each desire operation to the actual physical device.

In much the same manner as the SelectedDevice object describe above, the SelectedPrinter object delegates each operation to a selected actual Printer 36 connected to the system. In this instance, the SelectedPrinter object would perhaps hide from the PDPD the fact that invoking certain operations on the selected Printer, such as the "get user specified job ticket" operation, may actually have the effect of causing a different printer to become selected. The same SelectedPrinter object also would preferably act as a proxy for different actual Printers as the user selects them. The printing device then, in turn, receives a JobTicket object 34 encapsulating knowledge of which job template attributes and values a specific printer supports and perhaps storing the chosen value for each job template attribute. Each Printer instance then would have a JobTicket object holding the default settings for jobs on that printer. For interfacing with the PDPD, the system preferably supports transferring job settings into and out of the JobTicket object as XML-encoded strings rather than via a plethora of individual job template attribute methods.

The printing device preferably also interfaces with a JobTicketUI object 37 which encapsulates a CustomJobTicketUI for a specific printing device and, when displayed, this UI is furnished the individual JobTicket object that specifies the displayed settings. The user's inputs are then preferably recorded in the JobTicket object that is returned so as to inform the caller what the new settings are. The JobTicketUI object is also preferably able to request invocation of the DeviceListUI object so as to enable the selection of a different device.

Lastly, the printing device has knowledge of the DeviceStatus object 38 which has the capability of discovering a device's status in real time and perhaps displaying or otherwise acquiring an icon (or a textual description) representing the device's status for presentation to the user. Preferably, the DeviceStatus object also embodies one or more pictorial representations of the particular device, for example, a big red X would be displayed if there was a problem.

The configuration of Figure 5 provides only job settings control via the JobTicketTUI object. The PDPD uses the platform native Renderer and uses the platform native print job submission mechanism. Printers in this configuration may support various kinds of Renderers, such as java.awt.Graphics2D to PostScript, java.awt.Graphics2D to a proprietary bitmapped format, Unicode text to a proprietary byte stream format, and so on. It should be understood that in this embodiment, no Java classes are downloaded dynamically and no Printlet-Enabled device discovery capability is provided.

The PrintletManager might alternatively be a single component downloaded all at once, or multiple components downloaded separately. For example, the PrintletManager might consist of multiple components for Printlet downloading, Printlet security checking, Printlet installation, PrintJob management, shared printer-independent functions, etc. A particular printer's Printlet might alternatively be a single component downloaded all at once, or multiple components downloaded separately. For example, the Printlet might consist of multiple components for one or more CustomPrinterUI's, printout rendering, printer management, etc. Also, reusable software components may reside in any part of the architecture of the present invention. For example, a printout rendering software component (such as a component that converts platform native graphics directives to PostScript) might reside in the Printlet, or might reside in the PrintletManager, or might reside in the PDPD. In the latter two cases, all Printlets would preferably share the printout rendering software component via the Printlet API. The PrintletManager and/or the Printlets could alternatively reside in and be downloaded from a file server, an HTTP webserver, a Jini lookup server, etc.

In summary, the present invention provides all the same benefits as the conventional print client software architecture. For instance, printer interface code does not have to be built into the operating system; instead, it is built into the aggregation of the PDPD, PrintletManager, and Printlets. Client application programs are insulated from the details of interfacing with particular printers. The client applications all use the same standard client print API, and the operating system in conjunction with the PDPD, the PrintletManager, and the selected Printlet takes care of actually interfacing with the printer. And, CustomPrintUIs are easily supported.

In order to be able to use a particular printer in the conventional prior art architecture, the user must first manually install that printer's PrintDriver. In the Printlet architecture of the present invention, the system automatically locates and downloads the requisite Printlet and the user can use arbitrary printers "on the fly." In order to be able to use more than one kind of printer in the conventional architecture, the user must pre-install more than one PrintDriver. In the Printlet architecture of the present invention, the user only has to install (or interface with) a single PDPD. The system automatically locates and downloads the proper Printlets from multiple kinds of printers. Further, since the PrintletManager and Printlets are platform independent, the CustomPrintUI may conveniently employ platform independent GUI look and feel conventions. Thus, a printer may have the same GUI on all operating systems. Thus, to use the same printer from different client platforms, the user must only learn to use a single custom GUI. And, since the PDPD is platform dependent but printer independent, a vendor that presently sells M printers and supports N operating systems need only develop M+N separate modules (i.e., M Printlets and N PDPDs), not M'N separate drivers thereby decreasing product development expense. Lastly, software administration is made much easier by the present invention. For example, a printer's embedded software can be changed without having to change any client workstation software. The Printlet that resides in the printer is updated at the same time as the printer's embedded software. The platform's PDPD then automatically downloads the new Printlet the next time a client application sends a job to that device.

In addition to the above, the Printlet Software Architecture of the present invention provides these additional benefits. For instance, a suite of platform-independent reusable software components, including widgets, dialogs, etc., GUI, components for generating page description language output (such as PostScript), and other components can be made more readily available because product development teams can reuse these components to develop Printlets rather than build Printlets entirely from scratch thereby decreasing product development expense and achieving GUI coherence. The Printlet software architecture supports greatly extended printing functionality beyond what typical drivers provide. The PrintletManager/Printlet combination is essentially a full-fledged application program that not only can print a document but can also display printer status, display print job status, perform print job control, and so on. Not being tied to the standard GUI convention of any one platform, the PrintletManager's and Printlet's CustomPrintUI object can be designed for the greatest possible ease of use. As already mentioned, by employing platform-independent technology, the GUI will be the same on all platforms, thus users wont have to learn different GUIs on different platforms. Printers could be configured more flexibly (more often; more variances) because configuration can be done, for each printer without need for additional client workstation administration. The present invention allows printer vendors to stop writing drivers and, eventually, operating system vendors will write the PDPDs for their own configurations in accordance with the system and method put forth. By implementing to the same defined APIs, PDPDs and Printlets will work properly together even if developed by different organizations. Lastly, Vendors can implement PrintletManagers with all sorts of value-added features, some of which were suggested above. Since the PrintletManager is platform independent, a new PrintletManager will run on all platforms that have a PDPD, thus increasing the potential market size for PrintletManagers. By implementing to the same defined APIs, PDPDs, PrintletManagers, and Printlets will work seamlessly together even if developed by different organizations.

With the above-described detailed description of the preferred embodiment (and the alternative embodiment) of the present invention and the above-described variations thereto, one skilled in the art of computer architecture and programming will readily find their specific implementation in accordance herewith.

This invention may be embodied in other specific forms without departing from its spirit or essential characteristics. The above-described embodiments are to be considered in all respects only as illustrative and not restrictive in scope. The scope of the invention is, therefore, indicated by the appended claims rather than by the above-detailed description. Therefore, all changes which come within the meaning and range of equivalency of the claims are to be considered embraced within their scope.

## Claims

1. A system for placing a computer operating system in communication with a device connected thereto, comprising:
(a) a device driver means embedded in said device which enables communication with said device; and
(b) a device driver docking means installed upon said operating system for dynamically uploading said device driver means as a prelude to establishing communication with said device.

2. A method for placing a computer operating system in communication with a device connected thereto, comprising the steps of:
(a) activating a device driver docking means installed upon said operating system;
(b) uploading a device driver means from said device to said operating system; and
(c) activating said device driver means as a prelude to activating said device.

3. A printlet system for placing a computer operating system in communication with a device connected thereto, comprising:
a PrintDockDriver (PDPD) interfacing directly with a plurality of actual physical devices;
a DeviceListObject comprising a list of devices and which displays said list to a user, allowing the user to pick a SelectedDevice and which returns information about said SelectedDevice to said PDPD;
a SelectedDeviceObject residing in said PDPD which delegates each operation to said SelectedDevice; and
a JobTicketObject received by said SelectedDevice encapsulating knowledge of job template attributes said SelectedDevice supports.
